Europäisches Patentamt

European Patent Office

Office européen des brevets

(19)

(11) Numéro de publication : **0 019 677**
**B1**

(12) **FASCICULE DE BREVET EUROPÉEN**

(45) Date de publication du fascicule du brevet :
20.02.85

(51) Int. Cl.⁴ : **G 01 C 19/50, F 16 H 21/46**

(21) Numéro de dépôt : 79400326.9

(22) Date de dépôt : 23.05.79

(54) Erecteur de gyroscope de verticale.

(73) Titulaire : **SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay (FR)**

(72) Inventeur : **Chombard, Pierre**
**64, rue Denfert Rochereau**
**F-92100 Boulogne (FR)**

(74) Mandataire : **Rinuy, Guy et al**
**Cabinet Rinuy et Santarelli 14, Avenue de la Grande Armée**
**F-75017 Paris (FR)**

(43) Date de publication de la demande :
10.12.80 Bulletin 80/25

(45) Mention de la délivrance du brevet :
20.02.85 Bulletin 85/08

(84) Etats contractants désignés :
**BE DE GB IT SE**

(56) Documents cités :
**FR-A- 1 122 053**
**FR-A- 1 416 416**
**GB-A- 555 321**
**US-A- 2 351 619**
**US-A- 2 356 749**

Jouve, 18, rue St-Denis, 75001 Paris, France

## Description

L'invention se rapporte à un érecteur de gyroscope de verticale.

D'un certain point de vue, on peut classer les érecteurs connus des gyroscopes de verticale en deux grandes catégories :

— les érecteurs qui exercent des couples à caractère continu et qui sont généralement électriques ou pneumatiques ;

— les érecteurs mécaniques tournants qui exercent des couples dus à la gravité et qui ont un caractère pulsatoire.

On peut ranger dans cette dernière catégorie les érecteurs du type décrit dans le brevet français FR-A-1.416.416, délivré le 27 septembre 1965.

La différence des actions de ces deux catégories d'érecteurs entraîne des conséquences dues au fait que les couples érecteurs efficaces, c'est-à-dire ceux qui provoquent la vitesse de précession ou vitesse d'érection recherchée, sont, en réalité, égaux aux couples dus à l'action de l'érecteur diminués des couples parasites imputables aux frottements inévitables sur les axes de suspension du gyroscope.

On recherche habituellement de faibles vitesses d'érection en vue de minimiser les erreurs dues aux accélérations du véhicule porteur ; mais on est limité dans cette voie, d'une part pour limiter les erreurs de verticale dues aux couples parasites, d'autre part pour assurer une bonne sécurité de fonctionnement, étant donné que les couples parasites peuvent se dégrader avec le temps et suivant les conditions d'environnement.

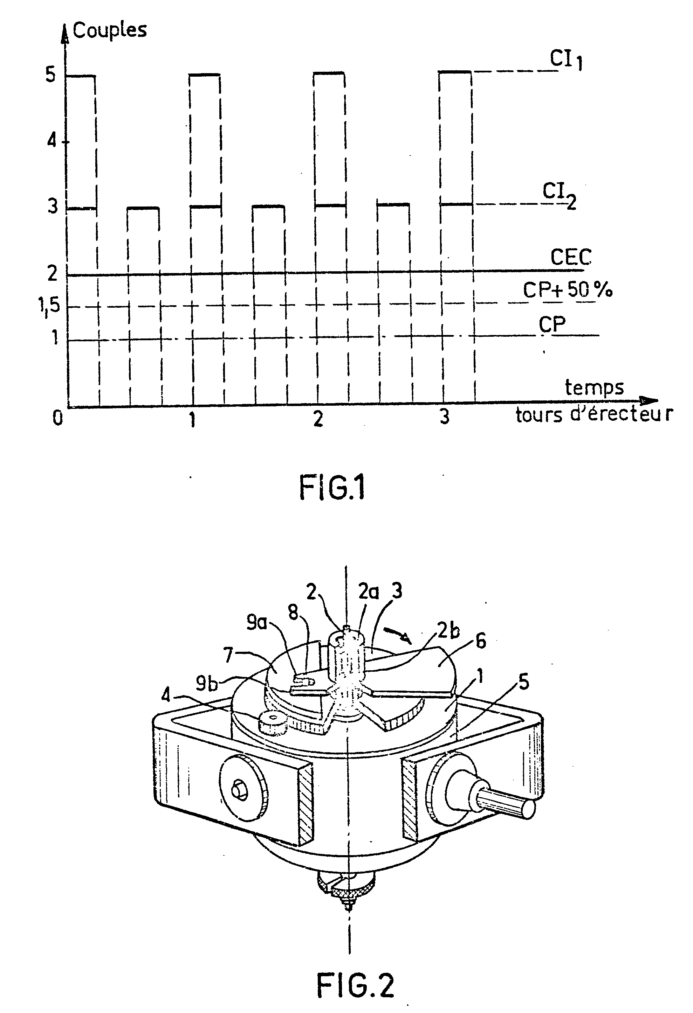

A cet égard, les érecteurs mécaniques présentent des avantages qu'on peut expliquer en se référant à la figure 1 du dessin annexé qui, sans représenter rigoureusement les phénomènes, en donne une image qui facilite la compréhension.

Le couple parasite (CP) de la suspension est supposé avoir la valeur 1 et le couple érecteur continu (CEC) la valeur 2. Le couple érecteur efficace a la valeur $2 - 1 = 1$.

Si on considère un érecteur à deux pendules donnant par conséquent deux couples impulsionnels ($CI_2$) par tour d'érecteur, dont chacun s'exerce pendant un quart de tour, la valeur supposée constante de ces couples donnant la même vitesse de précession que le couple érecteur continu considéré, devra être 3. En d'autres termes, la précession du gyroscope pendant le temps correspondant à un tour de l'érecteur mécanique est représentée par les surfaces rectangulaires situées au-dessus de la ligne 1 représentant la valeur du couple parasite. De même, la précession du gyroscope avec érecteur à couple continu est représentée par la surface rectangulaire au-dessus de la ligne 1.

Supposons maintenant que le couple parasite augmente de 50 % (CP + 50 %), c'est-à-dire qu'il prenne la valeur 1, 5, on voit que la surface représentant l'action de l'érecteur à couple continu diminue de moitié alors que les surfaces représentant l'action de l'érecteur mécanique n'ont diminué que d'un quart. Si le couple parasite doublait de valeur l'érecteur à couple continu deviendrait totalement inefficace alors que l'érecteur mécanique conserverait encore la moitié de son efficacité.

Cela signifie que l'érecteur mécanique offre des garanties de sécurité de fonctionnement nettement supérieures à celles des érecteurs à couple continu, toutes choses égales par ailleurs.

Cela montre également qu'on peut, tout en conservant une bonne garantie de sécurité, admettre pour les érecteurs mécaniques des vitesses de précession plus faibles dont on a vu plus haut qu'elles sont bénéfiques pour la qualité de verticale dans les conditions d'utilisation.

Bien entendu, comme déjà dit, les phénomènes réels ne répondent pas à des lois aussi simples mais leur aspect qualitatif reste conforme à ces conclusions.

La plupart des systèmes d'érecteurs à pendules instables déjà connus, notamment celui décrit dans le brevet français FR-A-1.416.416 déjà cité, et qui jouissent de l'avantage précédent, comportent au moins deux pendules instables. Ceci résulte du fait que, lorsque le gyroscope est vertical, le centre de gravité des pendules doit se trouver sur l'axe de l'érecteur pour obtenir une verticale stable.

On connaît cependant, tel que décrit dans le brevet des Etats-Unis d'Amérique US-A-2.351.619, un érecteur mécanique comprenant un seul pendule qui, devant vaincre la résistance d'un cliquet à ressort, donne une verticale imprécise.

La présente invention vise un érecteur mécanique de gyroscope de verticale, ne comprenant qu'un seul pendule instable tout en obtenant la même qualité de verticale que les érecteurs comportant au moins deux pendules, avec, comme avantages supplémentaires, une plus grande simplicité et une amélioration de la sécurité de fonctionnement au sens explicité plus haut.

Plus particulièrement, l'érecteur selon l'invention comprenant :

— un axe fixe solidaire du boîtier du gyroscope et parallèle à l'axe de celui-ci ;

— un pendule instable articulé autour dudit axe fixe ;

— un plateau tournant ayant pour axe de rotation ledit axe fixe ;

— des moyens de démultiplication entraînant en rotation le plateau et empruntant leur mouvement à l'axe du gyroscope ;

— un doigt fixé sur le plateau, ce doigt étant en contact poussoir avec le pendule sauf pour une certaine partie de sa course circulaire pourvu que, dans cette partie, le pendule soit soumis à l'action d'une composante de gravité perpendiculaire à l'axe fixe, due à une déviation de l'axe du gyroscope par rapport à la verticale, est caractérisé en ce que :

— il ne comprend qu'un seul pendule ;

— le pendule est prolongé par une fourche comportant deux bras, le pendule et la fourche étant prévus de part et d'autre de l'axe fixe ;

— le doigt est engagé entre les deux bras de la fourche de sorte que ledit contact poussoir soit établi entre le doigt et l'un des bras de la fourche et que l'autre bras entre en contact avec le doigt dans ladite partie de la course du pendule lorsque ladite composante de gravité se manifeste ;

— le plateau est pourvu d'un contrepoids destiné à contrebalancer le poids du pendule lorsque le doigt est en contact poussoir avec l'un desdits bras le contrepoids et le pendule étant diamétralement opposés dans ce cas et leur centre de gravité se trouvant alors sur l'axe fixe.

Les caractéristiques et avantages de la présente invention ressortiront de la description qui va suivre faite en regard du dessin annexé sur lequel :

la figure 1 représente le couple impulsionnel donné par un érecteur à un seul pendule selon l'invention, pendant un quart de tour de l'érecteur et donnant le même effet que le système à deux pendules ;

la figure 2 est une vue en perspective, avec coupe partielle, d'un érecteur à un seul pendule selon l'invention, monté sur un gyroscope.

Dans la forme de réalisation représentée, le couvercle (1) du boîtier du gyroscope comporte un axe central fixe (2) parallèle à l'axe du gyroscope.

Un plateau circulaire (3) qui tourne autour de cet axe fixe (2) est entraîné, en rotation, à vitesse réduite, par un pignon (4) qui engrène avec la couronne dentée extérieure de ce plateau.

Le pignon (4) emprunte son mouvement à l'axe du gyroscope par l'intermédiaire d'une démultiplication située dans le boîtier (5) et non représentée.

Au-dessus du plateau (3) est disposé un pendule instable (6) articulé autour de l'axe (2), de préférence par deux roulements à billes (2a) et (2b).

Le plateau (3) comporte une partie plus épaisse (7) destinée à contrebalancer le poids du pendule (6) lorsque ces deux éléments sont diamétralement opposés. Un petit doigt vertical (8) est fixé sur la partie (7). Il se trouve engagé entre deux bras (9a) et (9b) d'une fourche qui prolonge le pendule (6), la fourche et le pendule étant prévus de part et d'autre de l'axe fixe.

Le plateau (3) étant supposé entraîné dans le sens de la flèche, le doigt (8) se trouve en contact poussoir avec le bras (9a) quand le gyroscope est vertical. Dans cette position, le pendule (6) et la partie (7) formant contrepoids se trouvent opposés de manière que le centre de gravité de ces deux éléments se trouve sur l'axe (2).

Si l'axe du gyroscope n'est pas parallèle à la verticale, le pendule (6), à une certaine partie de sa course circulaire, tombe, entraîné par la composante de gravité perpendiculaire à l'axe (2) jusqu'à ce que le bras (9b) touche le doigt (8).

On sait que c'est cette chute qui provoque l'effet érectif. Celui-ci dépend à la fois du poids du pendule et de la course libre définie par l'écartement des bras (9a) et (9b).

L'érecteur à un seul pendule instable selon l'invention se trouve donc être d'une grande simplicité. Il apporte de surcroît une amélioration de la sécurité de fonctionnement au sens indiqué plus haut. Ce dernier point est rendu explicite par l'examen de la figure 1 où l'on a représenté le couple impulsionnel ($CI_1$) donné par un seul pendule pendant un quart de tour de l'érecteur et donnant le même effet que le système à deux pendules. Ce couple doit avoir pour cela la valeur 5. Dans l'hypothèse déjà envisagée d'une augmentation de 50 % du couple parasite, la surface représentant l'action de l'érecteur monopendule ne diminue que d'un huitième ; si le couple parasite double de valeur, la surface représentant l'action de l'érecteur monopendule ne diminue que d'un quart.

Il est bien entendu que la présente invention n'a été décrite et représentée qu'à titre d'exemple préférentiel et qu'on pourra apporter des équivalences dans ses éléments constitutifs sans, pour autant, sortir du cadre de l'invention qui est défini dans les revendications qui suivent.

## Revendications

1. Erecteur mécanique de gyroscope de verticale, comprenant :

— un axe fixe (2) solidaire du boîtier (5) du gyroscope et parallèle à l'axe de celui-ci ;

— un pendule instable (6) articulé autour dudit axe fixe (2) ;

— un plateau tournant (3) ayant pour axe de rotation ledit axe fixe (2) ;

— des moyens de démultiplication (4) entraînant en rotation le plateau et empruntant leur mouvement à l'axe du gyroscope ;

— un doigt (8) fixé sur le plateau, ce doigt étant en contact poussoir avec le pendule sauf pour une certaine partie de sa course circulaire, pourvu que, dans cette partie, le pendule soit soumis à l'action d'une composante de gravité perpendiculaire à l'axe fixe due à une déviation de l'axe du gyroscope par rapport à la verticale, caractérisé en ce que :

— il ne comprend qu'un seul pendule (6) ;

— le pendule (6) est prolongé par une fourche comportant deux bras (9a, 9b), le pendule et la fourche étant prévus de part et d'autre de l'axe fixe ;

— le doigt (8) est engagé entre les deux bras (9a, 9b) de la fourche de sorte que ledit contact poussoir soit établi entre le doigt et l'un des bras (9a) de la fourche et que l'autre bras (9b) entre en contact avec le doigt dans ladite partie de la course du pendule lorsque ladite composante de gravité se manifeste ;

— le plateau (3) est pourvu d'un contrepoids (7) destiné à contrebalancer le poids du pendule (6) lorsque le doigt (8) est en contact poussoir avec l'un desdits bras (9a) le contrepoids et le pendule étant diamétralement opposés dans ce cas, et leur centre de gravité se trouvant alors sur l'axe fixe.

2. Erecteur selon la revendication 1, caractérisé en ce que les moyens de démultiplication comprennent un pignon (4) qui engrène avec une couronne dentée extérieure du plateau (3).

3. Erecteur selon la revendication 1, caractérisé en ce que le contrepoids (7) destiné à contrebalancer le poids du pendule (6) est constitué par une partie plus épaisse du plateau tournant (3).

4. Erecteur selon l'une quelconque des revendications 1 à 3, caractérisé en ce que le doigt (8) engagé entre les deux bras (9a, 9b) de la fourche prolongeant le pendule (6) est fixé sur le contrepoids (7).

**Claims**

1. A mechanical erector for vertical gyroscope comprising :
— a fixed axis (2) fastened to the housing (5) of the gyroscope and parallel to the axis thereof,
— an unstable pendulum (6) articulated about said fixed axis (2),
— a rotary platen (3) having said fixed axis (2) as its rotational axis,
— reduction gear means (4) driving the platen into rotation and taking their motion from the gyroscope axis,
— a finger (8) secured to the platen, such finger being in urging contact with the pendulum except for a portion of its circular path provided that in such portion the pendulum is submitted to the action of a gravity component perpendicular to the fixed axis due to deviation of the gyroscope axis relative to the vertical, characterized in that ;
— it comprises only one pendulum (6),
— the pendulum (6) is extended by a fork comprising two arms (9a and 9b) with the pendulum and the fork being provided on either side of the fixed axis,
— the finger (8) enters between both arms (9a, 9b) of the fork such that said urging contact is established between the finger and one arm (9a) of the fork, the other arm (9b) enters into contact with the finger in said portion of the pendulum path when said gravity component occurs,
— the platen (3) is provided with a counterweight (7) for counterbalancing the weight of the pendulum (6) when the finger (8) is in urging contact with one of said arms (9a), the counterweight and the pendulum being in that case diametrically opposite and their center of gravity then lying on the fixed axis.

2. An erector according to claim 1, characterized in that the reduction gear means comprise a pinion (4) which meshes with an outer toothed ring of platen (3).

3. An erector according to claim 1, characterized in that the counterweight (7) for counterbalancing the weight of the pendulum (6) is constituted by a thicker portion of the rotary platen (3).

4. An erector according to any one of claims 1 to 3, characterized in that the finger (8) engaged between both arms (9a, 9b) of the fork extending the pendulum (6) is secured to the counterweight (7).

**Ansprüche**

1. Mechanische Aufrichtvorrichtung für ein Vertikalgyroskop mit :
— einer festen Achse (2), welche mit dem Gehäuse (5) des Gyroskopes fest verbunden und parallel zu dessen Achse ist ;
— einem um die feste Achse (2) beweglichen instabilen Pendel (6) ;
— einer Drehplatte (3), deren Drehachse die feste Achse (2) ist ;
— Untersetzungsmitteln (4), welche die Platte in Drehung antreiben und ihre Bewegung von der Gyroskopachse erhalten ;
— einem an der Platte befestigten Finger (8), welcher mit dem Pendel bis auf einen gewissen Abschnitt seiner Kreisbahn in Schiebekontakt ist, vorausgesetzt daß in diesem Abschnitt das Pendel der Wirkung einer zur festen Achse senkrechten Schwerkraft-Komponente unterworfen ist infolge einer Abweichung der Gyroskopachse zur Vertikalen, dadurch gekennzeichnet, daß :
— nur ein Pendel (6) vorhanden ist,
— das Pendel (6) durch eine Gabel verlängert ist, welche zwei Zweige (9a, 9b) besitzt, wobei das Pendel und die Gabel auf der einen und der anderen Seite der festen Achse vorgesehen sind ;
— der Finger (8) zwischen den beiden Zweigen (9a, 9b) der Gabel derart eingesetzt ist, daß der Schiebekontakt zwischen dem Finger und dem einen Zweig (9a) der Gabel hergestellt und daß der andere Zweig (9b) mit dem Finger in dem genannten Teil der Pendelbahn in Kontakt kommt, wenn die Schwerkraftkomponente sich bemerkbar macht ;
— die Platte (3) mit einem Gegengewicht (7) versehen ist, bestimmt zum Ausgleich des Gewichtes des Pendels (6), wenn der Finger (8) in Schiebekontakt mit einem der Zweige (9a) ist, wobei das Gegengewicht und das Pendel in diesem Fall diametral entgegengesetzt liegen und ihr Schwerpunkt sich dann auf der festen Achse befindet.

2. Aufrichtvorrichtung nach Anspruch 1, dadurch gekennzeichnet, daß die Untersetzungsmittel ein Ritzel (4) umfassen, welches mit einem Außenzahnkranz der Platte (3) in Kämmeingriff ist.

3. Aufrichtvorrichtung nach Anspruch 1, dadurch gekennzeichnet, daß das zum Ausgleich des Gewichtes des Pendels (6) bestimmte Gegengewicht (7) durch einen verdickten Abschnitt der Drehplatte (3) gebildet ist.

4. Aufrichtvorrichtung nach einem der Ansprüche 1 bis 3, dadurch gekennzeichnet, daß der zwischen den beiden Zweigen (9a, 9b) der das Pendel (6) verlängernden Gabel in Eingriff befindliche Finger (8) an dem Gegengewicht (7) befestigt ist.

FIG.1

FIG.2